(19) Europäisches Patentamt
European Patent Office
Office européen des brevets

(11) **EP 2 736 165 B1**

(12) **EUROPEAN PATENT SPECIFICATION**

(45) Date of publication and mention
of the grant of the patent:
**08.04.2020 Bulletin 2020/15**

(21) Application number: **12817332.5**

(22) Date of filing: **28.05.2012**

(51) Int Cl.:
*H02P 29/024* *(2016.01)*     *H02P 29/032* *(2016.01)*
*H02P 23/14* *(2006.01)*     *H02P 21/00* *(2016.01)*

(86) International application number:
**PCT/JP2012/063681**

(87) International publication number:
**WO 2013/015010 (31.01.2013 Gazette 2013/05)**

(54) **POWER CONVERTER**

STROMWANDLER

CONVERTISSEUR ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2011 JP 2011160384**

(43) Date of publication of application:
**28.05.2014 Bulletin 2014/22**

(73) Proprietor: **Hitachi Industrial Equipment Systems
Co., Ltd.
Tokyo 101-0022 (JP)**

(72) Inventor: **ARAO, Yusuke
Tokyo 101-00221 (JP)**

(74) Representative: **Mewburn Ellis LLP
City Tower
40 Basinghall Street
London EC2V 5DE (GB)**

(56) References cited:
**WO-A1-2005/025047     WO-A2-2010/133303
JP-A- H1 118 496     JP-A- 2001 218 500
JP-A- 2002 186 293     JP-A- 2008 172 949
US-A1- 2003 020 432     US-A1- 2003 160 585**

**Description**

TECHNICAL FIELD

The present invention relates to a power converter that protects a motor from heating.

BACKGROUND ART

Heretofore, a technique is known in which attention is focused on an electric current carried through a motor and an abnormal current is detected to protect the motor from heating. However, the technique has a problem in that no consideration is taken on the influence of an increase in an iron loss caused by overexcitation of a motor and it is not enabled to protect the motor. For a technique that solves the problem, Patent Document 1 shows a power converter that protects an alternating-current motor from heating in consideration of an iron loss increased in the case where the alternating-current motor is operated in an overexcitation state.

More specifically, the power converter includes: an electric current detecting unit that detects an electric current carried through a motor connected as a load; a frequency-and-voltage computing unit that corrects a frequency instruction or an output voltage instruction based on the detected electric current; and an electronic thermal unit that protects the motor from overheating. The power converter computes a ratio between the rated voltage/the rated frequency that is the reference of the motor and the output voltage instruction/the frequency instruction after corrected at the frequency-and-voltage computing unit as a magnetic flux ratio, determines whether the motor is overexcited using the magnetic flux ratio, corrects the detected electric current value according to the overexcitation state, and protects the motor from overheating using the electric current corrected according to the overexcitation state.

RELATED ART DOCUMENT

PATENT DOCUMENT

Patent Document 1: Japanese Patent Application Laid-Open Publication No. 2008-172949
US2003/020432 discloses an inverter apparatus for controlling the speed of an induction motor variably.
WO 2010/020423 discloses an overcurrent limit in the control of three-phase machines fed by an inverter.
JP H11 18496 discloses a controller and control method for an electric vehicle.

SUMMARY OF THE INVENTION

PROBLEMS THAT THE INVENTION IS TO SOLVE

However, it is likely that it is not enabled for the power converter described in Patent Document 1 above to make an accurate determination because it is determined whether the value reaches the protection level based on the detected value of an electric current carried through the alternating-current motor detected at the electric current detecting unit. Namely, since an electric current carried through the alternating-current motor includes currents other than excitation currents such as a torque current, it is likely to determine that the motor is overexcited due to an electric current other than an excitation current. Moreover, since the magnetic flux ratio is used to detect whether the motor is overexcited, the detecting unit becomes complicated. Furthermore, the power converter described in Patent Document 1 above stops the operation and protects the motor from heat caused by overexcitation when the power converter determines that the value reaches the protection level. In the case where the protection function operates, it is not enabled to continue operations.

In consideration of the previously existing problems, the present invention is to provide a power converter that accurately detects the overexcitation of an alternating-current motor and controls the alternating-current motor so as to suppress overexcitation when an overexcitation is detected.

MEANS FOR SOLVING THE PROBLEMS

In order to solve the problems, the present invention includes: an electric power converting unit according to claim 1.

Moreover, in the power converter described above, the electric power converting unit is configured of a switching circuit including an upper arm and a lower arm. The control unit controls interrupting intervals of the upper arm and the lower arm based on the overexcitation determination information from the overexcitation determining unit, and suppresses an output electric current from the electric power converting unit.

Furthermore, in the power converter described above, the control unit controls correction of an excitation voltage instruction in a direction in which an output voltage of the electric power converting unit is reduced based on the over-excitation determination information from the overexcitation determining unit, and suppresses an overexcitation state.

In addition, in the power converter described above, the control unit controls the electric power converting unit to stop the alternating-current motor based on the overexcitation determination information from the overexcitation determining unit.

Moreover, in the power converter described above, a display unit configured to display a state of the power converter is further provided. An overexcitation state is displayed on the display unit according to the overexcitation determination information from the overexcitation determining unit.

EFFECT OF THE INVENTION

According to the present invention, it is possible to accurately detect the overexcitation state of the alternating-current motor. Moreover, it is possible to continue operations so as to prevent the alternating-current motor from burning when an overexcitation state is detected.

BRIEF DESCRIPTION OF THE DRAWINGS

Fig. 1 is a block diagram of a power converter according to a first embodiment and a second embodiment of the present invention;
Fig. 2 is a flowchart illustrative of an overexcitation determining process according to the first embodiment;
Fig. 3 is a flowchart illustrative of a control process after determining overexcitation according to the first embodiment;
Fig. 4 is a flowchart illustrative of an overexcitation determining process according to a second embodiment; and
Fig. 5 is a flowchart illustrative of a control process after determining overexcitation according to a second embodiment not forming part of the invention.

MODE FOR CARRYING OUT THE INVENTION

In the following, embodiments will be described with reference to the drawings.

First Embodiment

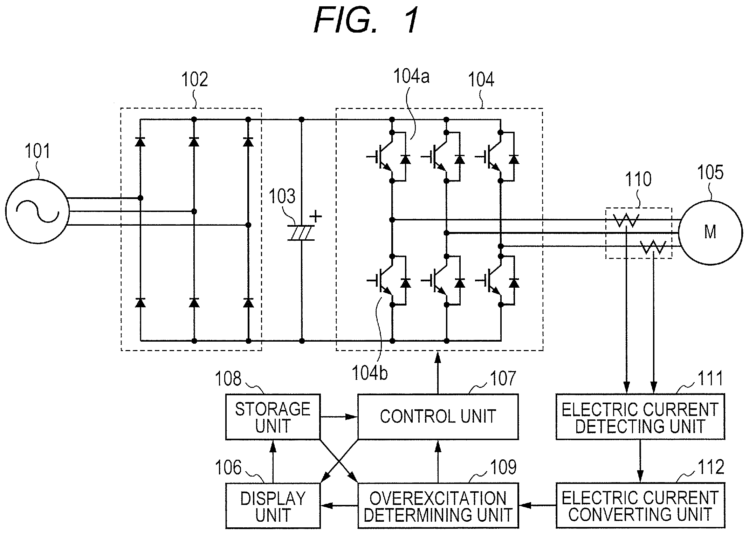

In a first embodiment, an example will be described that overexcitation is determined. Fig. 1 is a block diagram of examples of a power converter and an alternating-current motor 105 according to the embodiment.

The power converter according to the embodiment is configured of a direct current converting unit 102, a smoothing capacitor 103, an electric power converting unit 104, a display unit 106, a control unit 107, a storage unit 108, an overexcitation determining unit 109, an electric current detector 110, an electric current detecting unit 111, and an electric current converting unit 112.

101 denotes a three-phase alternating-current power supply, to which a three-phase alternating-current voltage is supplied from a power company, or an alternating-current voltage is supplied from a power generator, for example, and the three-phase alternating-current power supply inputs an alternating-current voltage to the direct current converting unit 102.

The direct current converting unit 102 is configured of a diode circuit and a converter circuit using an IGBT and a flywheel diode, for example. The direct current converting unit 102 converts the alternating-current voltage inputted from the three-phase alternating-current power supply 101 into a direct-current voltage, and outputs the direct-current voltage to the smoothing capacitor 103. In Fig. 1, a converter configured of diodes is illustrated.

The smoothing capacitor 103 smooths the direct-current voltage inputted from the direct current converting unit 102, and outputs the smoothed direct-current voltage to the electric power converting unit 104. For example, in the case where the output of the power generator is a direct-current voltage, a direct-current voltage may be directly inputted from the power generator to the smoothing capacitor 103 as the direct current converting unit 102 is omitted.

The electric power converting unit 104 is configured of a switching circuit including an upper arm 104a and a lower arm 104b using an IGBT and a flywheel diode, for example. The electric power converting unit 104 receives the direct-current voltage of the smoothing capacitor 103 and a voltage instruction instructed from the control unit 107, converts the direct-current voltage into an alternating-current voltage, and outputs the alternating-current voltage to the alternating-current motor 105 for driving the alternating-current motor 105.

The display unit 106 is configured of an I/O device such as an operator, for example. The display unit 106 receives overexcitation determination information from the overexcitation determining unit 109, determines the information, and displays a warning to the outside. Moreover, the display unit 106 outputs manipulated setting data, for example, to the storage unit 108, and operation instruction information, for example, to the control unit 107.

The storage unit 108 is configured of a non-volatile memory, for example, and stores the specified current value set using the I/O device of the display unit 106 and setting information that determines the control operation of the power converter after detecting overexcitation.

The electric current detector 110 is configured of a hole CT and a shunt resistor, for example. The electric current detector 110 detects an electric current carried from the electric power converting unit 104 to the alternating-current motor 105, and outputs the electric current as a detected electric current value to the electric current detecting unit 111. The electric current detector 110 may be disposed at any position as long as the electric current detector 110 is disposed at a position at which a three-phase output electric current can be estimated or directly detected. In Fig. 1, an exemplary position is illustrated at which an electric current carried through the alternating-current motor 105 is directly detected.

The electric current detecting unit 111 acquires the detected electric current value inputted from the electric current detector 110 as a three-phase alternating-current electric current, for example, and outputs the detected electric current value to the electric current converting unit 112.

The electric current converting unit 112 converts three-phase alternating-current electric currents $i_u$, $i_v$, and $i_w$ from the electric current detecting unit 111 into a two-axes fixed coordinate system ($i_\alpha$, $i_\beta$) using (Equation 1).

[Equation 1]

$$\begin{pmatrix} i_\alpha \\ i_\beta \end{pmatrix} = \begin{pmatrix} \cos 0 & \cos \frac{2\pi}{3} & \cos \frac{4\pi}{3} \\ \sin 0 & \sin \frac{2\pi}{3} & \sin \frac{4\pi}{3} \end{pmatrix} \begin{pmatrix} i_u \\ i_v \\ i_w \end{pmatrix}$$

(Equation 1)

The electric current converting unit 112 converts the fixed coordinate system into a rotating coordinate system ($i_d$, $i_q$) using (Equation 2).

[Equation 2]

$$\begin{pmatrix} i_d \\ i_q \end{pmatrix} = \begin{pmatrix} \cos\theta & \sin\theta \\ -\sin\theta & \cos\theta \end{pmatrix} \begin{pmatrix} i_\alpha \\ i_\beta \end{pmatrix}$$

(Equation 2)

Thus, the excitation current $i_d$ contributing to the excitation of the motor and the torque current $i_q$ contributing to the torque of the motor can be detected. Moreover, the electric current converting unit 112 finds a primary electric current $i_1$ carried through the alternating-current motor 105 from the detected excitation current and the torque current using (Equation 3).

[Equation 3]

$$i_1 = \sqrt{i_d^2 + i_q^2}$$

(Equation 3)

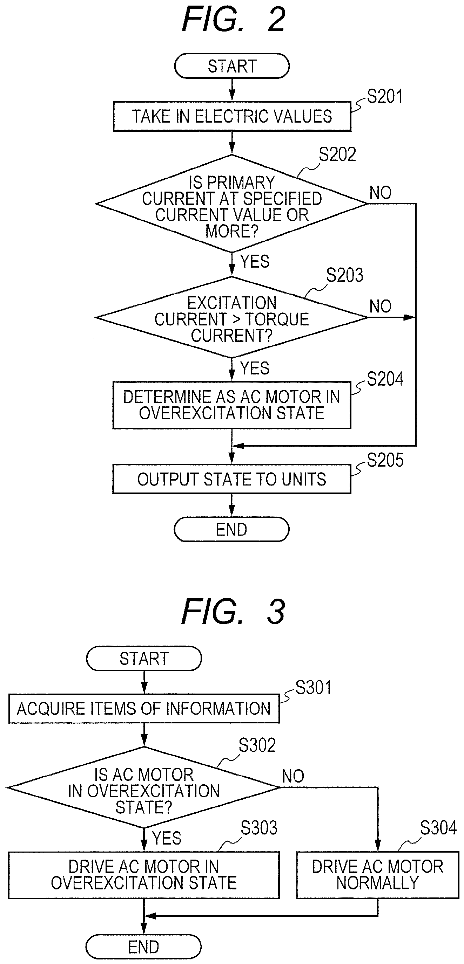

The overexcitation determining unit 109 receives the setting information stored on the storage unit 108 and electric current information obtained by conversion at the electric current converting unit 112, determines whether the alternating-current motor 105 is overexcited, and outputs overexcitation determination information to the display unit 106 and the control unit 107. The specific method will be described for individual Steps (S) with reference to a flowchart in Fig. 2.

First, the overexcitation determining unit 109 takes in the excitation current $(i_d)$, the torque current $(i_q)$, and the primary current $(i_1)$ as electric values outputted from the electric current converting unit 112 (Step S201). Subsequently, the overexcitation determining unit 109 compares the specified current value preset on the storage unit 108 with the primary current $(i_1)$ (Step S202). The specified current value preset on the storage unit 108 is an electric current set value, for example, provided for heat protection, which is 80% of the rated electric current of the motor, for example.

In the case where the primary electric value is the specified current value or more in Step S202 above, the overexcitation determining unit 109 compares the excitation current $(i_d)$ with the torque current $(i_q)$ (Step S203). When the excitation current is greater than the torque current, the overexcitation determining unit 109 determines that the motor is in an overexcitation state (Step S204).

It is noted that in determining overexcitation, preset parameters may be used, not comparison with the torque current. In this case, for example, it may be fine that an excitation current 1.5 times the excitation current value under the unloaded condition for the motor is set as a set value and overexcitation is determined in the case where the excitation current $(i_d)$ exceeds this set value.

The overexcitation determining unit 109 outputs the determined overexcitation determination information to the display unit 106 and the control unit 107 (Step S205). It is noted that at this time, the overexcitation determining unit 109 becomes unstable in the operation when returned from the overexcitation state to the normal excitation state in the case where the motor is temporarily turned into the overexcitation state and again returned into the normal state. In order to prevent the unsuitability, time interval characteristics may be provided for the transition of the excitation state.

In the determination of the overexcitation state in Fig. 2, overexcitation is determined through two steps in Step S202 and Step S203. In the first Step S202, it is determined whether the primary current $(i_1)$ including the excitation current and the torque current is greater than the specified value. In the case where the primary current $(i_1)$ is greater than the specified value, the process goes to Step S203 because the motor is possibly overexcited, whereas in the case where the primary current $(i_1)$ is smaller than the specified value, the process goes to Step S205 because it is determined that the motor is normally excited. The case where the primary current is smaller than the specified value means the case where the torque current is small because a load is small and the excitation current is mostly occupied, for example.

In the subsequent Step S203, the excitation current is compared with the torque current. It is determined that the motor is overexcited in the case where the excitation current is greater than the torque current, whereas it is determined that the motor is normally excited in the opposite case. Namely, even though it is determined that the primary current $(i_1)$ is greater than the specified value in Step S202, it is determined that the motor is normally excited in the case where the cause is an increase in the torque current in association with an increase in a load, whereas it is determined that the motor is overexcited only in the case where the excitation current is greater than the torque current. In other words, it is determined that the motor is overexcited only in the case where the excitation current is excessively carried through the motor with no necessity, so that overexcitation can be accurately determined. Moreover, the configuration of determining overexcitation can be easily configured.

The control operation after it is determined that the motor is overexcited will be described. The control unit 107 receives setting information stored on the storage unit 108 in presetting and overexcitation determination information at the overexcitation determining unit 109 as inputs, determines the control operation of the power converter later, and outputs PWM control information to the electric power converting unit 104.

When the description is given with reference to Fig. 3, first, the control unit 107 acquires setting information that is set on the storage unit 108 to determine the control operation of the power converter when overexcitation is detected and overexcitation information from the overexcitation determining unit 109 (Step S301). The control unit 107 determines whether the acquired items of information express the overexcitation state (Step S302). In the case where the information expresses overexcitation, the control unit 107 selects setting information to suppress overexcitation from items of setting information stored on the storage unit 108, and gives a PWM control signal to the electric power converting unit 104. The electric power converting unit 104 is controlled by the PWM control signal, and is controlled on the output to be supplied to the alternating-current motor 105 so as to suppress overexcitation (drive in the overexcitation state) (Step S303). In the case where the information does not express the overexcitation state, the motor is continued in normal drive (Step S304). Moreover, the overexcitation state is displayed on the display unit 106 to give a warning as one of the control operations.

It is noted that it may be fine that in order to prevent faulty determination, in the determination whether the motor is in the overexcitation state (Step S302), it is determined that the motor is in the overexcitation state in the case where it is determined that the motor is overexcited for three times, for example, as the result of a plurality of determinations.

In the control over the electric power converting unit 104 using the PWM control signal described in Step S303 in Fig. 3, the operation of the alternating-current motor 105 is continued while suppressing overexcitation by suppressing output pulses supplied to the alternating-current motor 105. A detailed example will be described for the control operation.

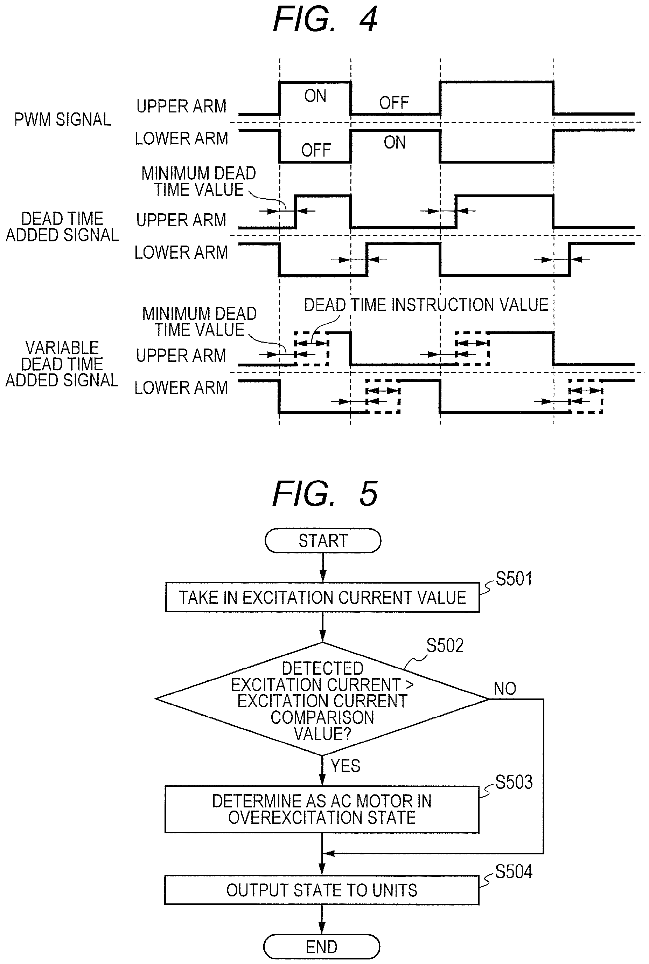

Fig. 4 illustrates the manner of one phase of voltage pulse instructions given from the control unit 107 to the electric power converting unit 104. The control unit 107 outputs a PWM control signal added with dead time as a control signal for the electric power converting unit 104 in order to prevent an upper arm 104a and a lower arm 104b of the switching circuit from short-circuiting. More specifically, in the case where the overexcitation determining unit 109 determines that the motor is overexcited, the control unit 107 makes dead time set for preventing the upper arm and the lower arm from short-circuiting to be the minimum value, adds a dead time instruction value to dead time, and varies (increases) dead time based on overexcitation determination information from the overexcitation determining unit. As described above, when dead time is increased, the pulse duration of the PWM control signal is reduced, and it is made possible to suppress the output voltage outputted from the electric power converting unit 104 to the alternating-current motor 105 and an electric current carried through the alternating-current motor 105.

In the case where the control unit 107 varies dead time, it may be fine that dead time is immediately set at 10 $\mu$s or dead time is gradually brought close to 10 $\mu$s when the alternating-current motor 105 is overexcited in the case where the minimum dead time is defined as 3 $\mu$s and the variable range is 10 $\mu$s, for example. Moreover, the similar thing is applied in the process of returning dead time to the minimum value when the alternating-current motor 105 is returned from the overexcitation state. Furthermore, it may be fine that dead time is increased as linked to the amount of the primary current or the excitation current exceeding the specified current value in varying dead time.

Next, another example will be described that in the case where the motor is turned into the overexcitation state, the control unit 107 controls the output voltage to the alternating-current motor 105 to continue the operation. Here, although the excitation voltage instruction is supplied from the control unit 107 to the electric power converting unit 104 in order to control the output voltage of the electric power converting unit 104, the excitation voltage instruction is used for control.

In the case where the alternating-current motor 105 is turned into the overexcitation state, the control unit 107 controls the correction of the excitation voltage instruction in the direction in which the output voltage of the electric power converting unit 104 is reduced based on overexcitation determination information from the overexcitation determining unit, and continues the operation of the alternating-current motor 105. In the correction control, for example, in the case where the excitation current reaches the specified current value or more for overexcitation, the control unit 107 performs PI control in the direction in which the excitation voltage instruction is reduced (in the negative direction) as the specified current value is a target value. In the case where the negative integration term controlled in the reducing direction is turned into a positive value (the negative value is turned to a positive value beyond zero), which is the case where the excitation current is reduced to the specified current value due to PI control, it is determined that the excitation current is out of the overexcitation state.

Moreover, for an example of stopping the operation, in the case where the motor is turned into the overexcitation state, such control is performed in which the alternating-current motor 105 is reduced in speed and stopped by the instruction from the control unit 107 or in which the output of the electric power converting unit 104 is interrupted. For example, in the case where the motor is overexcited because a parameter for use in control is inappropreately set, for example, in controlling the alternating-current motor 105 by the control unit 107, the alternating-current motor 105 is stopped and a warning for an overexcitation state is issued, because of association with changes in the settings of the parameters. This control is necessary in the case where overexcitation occurs when an unexpected motor is connected, not a standard motor.

Second Embodiment not forming part of the invention

In a second embodiment not forming part of the invention, components in common with the components in the first embodiment will be described using similar reference numerals and signs, and different components will be described in detail. The configuration of the embodiment is similar to the configuration in Fig. 1 described in the first embodiment.

As similar to the first embodiment, an electric current converting unit 112 converts a three-phase alternating-current electric current inputted from an electric current detecting unit 111 into a two-axes fixed coordinate system using (Equation 1) described above, and converts the two-axes fixed coordinate system into a rotating coordinate system using (Equation 2). Thus, the excitation current contributing to the excitation of a motor and the torque current contributing to the torque of the motor can be detected. Moreover, the primary electric current carried through an alternating-current motor 105 is found from the converted excitation current and the converted torque current using (Equation 3).

An overexcitation determining unit 109 receives setting information stored on the storage unit 108, electric current information obtained from conversion at the electric current converting unit 112, and an excitation current instruction computed at a control unit 107, determines whether the alternating-current motor 105 is overexcited, and outputs the determination information to a display unit 106 and the control unit 107. The specific control will be described with reference to Fig. 5.

First, the overexcitation determining unit 109 takes in the excitation current value (the detected excitation current) outputted from the electric current converting unit 112 and the excitation current instruction (the excitation current comparison value) computed at the control unit 107 (S501). Subsequently, the overexcitation determining unit 109 compares the detected excitation current with the computed excitation current comparison value (S502). The excitation current comparison value at this time is a value calculated from the value of a standard excitation current instruction of a motor, which is supposed to be 150% of the value of the excitation current instruction under an unloaded condition, for example. As described above, in the embodiment, the excitation current value outputted from the electric current converting unit 112 is compared with the excitation current instruction (the excitation current comparison value) computed at the control unit 107, and overexcitation is determined.

As described above, in the embodiment, the excitation currents are directly compared, so that overexcitation can be determined in a more accurate, simpler configuration.

The overexcitation determining unit 109 determines that the motor is in the overexcitation state when the excitation current value is greater than the excitation current comparison value (S503). The overexcitation determining unit 109 outputs the determined overexcitation information to the display unit 106 and the control unit 107 (S504). At this time, the overexcitation determining unit 109 becomes unstable in the operation when returned from the overexcitation state to the normal excitation state in the case where the motor is temporarily turned into the overexcitation state and again returned into the normal state.

The following is a detailed example of operation control for suppressing overexcitation. In the case where the motor is turned into the overexcitation state, the PWM control signal from the control unit 107 to the electric power converting unit 104 is controlled to continue the operation while controlling the output pulse from the electric power converting unit 104 to the alternating-current motor 105. As similar to the first embodiment, the pulse duration is controlled as illustrated in Fig. 4, so that the output voltage outputted from the electric power converting unit 104 to the alternating-current motor 105 and an electric current carried through the alternating-current motor 105 can be suppressed.

Moreover, control is performed as similar to the first embodiment for another example in which in the case where the motor is turned into the overexcitation state, the operation of the motor is continued while the control unit 107 controls the output voltage to the alternating-current motor 105. Furthermore, for an example of stopping the operation, the control unit 107 reduces the speed and stops the alternating-current motor 105 or interrupts the output of the electric power converting unit in the case where the motor is turned into the overexcitation state. For example, in the case where the motor is overexcited because a parameter for use in control is inappropreately set, for example, in controlling the alternating-current motor 105 by the control unit 107, the alternating-current motor 105 is stopped and a warning of the overexcitation state is issued in association with changes in the settings of the parameters.

It is noted that the present invention is not limited to the foregoing embodiments, and includes various exemplary modifications. For example, the foregoing embodiments are described in detail for easily understanding the present invention, and the present invention is not necessarily limited to ones including all of the described configurations.

In addition, it may be fine that a part or all of the foregoing configurations, the functions, the processing units, and the processing modules, for example, are implemented by hardware as by designing them using an integrated circuit, for example. Moreover, it may be fine that the foregoing configurations and the functions, for example, are implemented by software in which a processor interprets programs to implement and execute the functions. Information such as programs, tables, and files to implement the functions can be placed on a recording device such as a memory, a hard disk, and an SSD (SOLID STATE DRIVE) or on a recording medium such as an IC card, an SD card, and a DVD.

Furthermore, control lines and information lines are illustrated, which are considered to be necessary for explanation, and all of the control lines and the information lines of a product are not always illustrated.

DESCRIPTION OF REFERENCE NUMERALS AND SIGNS

| | |
|---|---|
| 101 | Three-phase alternating-current voltage |
| 102 | Direct current converting unit |
| 103 | Smoothing capacitor |
| 104 | Electric power converting unit |
| 104a | Upper arm |
| 104b | Lower arm |
| 105 | Alternating-current motor |
| 106 | Display unit |
| 107 | Control unit |
| 108 | Storage unit |
| 109 | Overexcitation determining unit |
| 110 | Electric current detector |

111    Electric current detecting unit
112    Electric current converting unit

**Claims**

1. A power converter comprising:

   an electric power converting unit (104) configured to convert direct-current power into desired alternating-current power;
   an electric current detecting unit (111) configured to detect an electric current outputted from the electric power converting unit to an alternating-current motor (105);
   an electric current converting unit (112) configured to convert electric current information detected at the electric current detecting unit (111) into an excitation current, a torque current, and a primary electric current;
   **characterised in that** the power converter comprises:
   an overexcitation determining unit (109) configured to:

   compare a specified current value with the primary electric current, and
   only in the case of where the primary electric current is greater than or equal to the specified current value, the overexcitation determining unit (109) compares the excitation current with the torque current, the excitation current and the torque current being converted at the electric current converting unit (112), and output overexcitation determination information when the excitation current is greater than the torque current, and
   a control unit (107) configured to give a control signal to the electric power converting unit (104) and control an output supplied from the electric power converting unit to the alternating-current motor (105), such that based on the overexcitation determination information from the overexcitation determining unit (109) the control unit (107) is further configured to select preset setting information to suppress overexcitation of the output supplied from the electric power converting unit.

2. The power converter according to claim 1,
   wherein the electric power converting unit (104) is configured of a switching circuit including an upper arm (104a) and a lower arm (104b; and
   the control unit (107) controls interrupting intervals of the upper arm (104a) and the lower arm (104b) based on the overexcitation determination information from the overexcitation determining unit (109), and suppresses an output electric current from the electric power converting unit.

3. The power converter according to claim 1 or 2,
   wherein the control unit (107) controls correction of an excitation voltage instruction in a direction in which an output voltage of the electric power converting unit (104) is reduced based on the overexcitation determination information from the overexcitation determining unit (109), and suppresses an overexcitation state.

4. The power converter according to claim 1, wherein the control unit (107) controls the electric power converting unit (104) to stop the alternating-current motor (105) based on the overexcitation determination information from the overexcitation determining unit (109).

5. The power converter according to any one of claims 1 to 5, further comprising a display unit (106) configured to display a state of the power converter, wherein an over-excitation state is displayed on the display unit according to the overexcitation determination information from the overexcitation determining unit (109).

**Patentansprüche**

1. Leistungswandler, der Folgendes umfasst:

   eine elektrische Leistungswandlereinheit (104), die ausgelegt ist, Gleichstromleistung in Soll-Wechselstromleistung umzuwandeln;
   eine elektrische Stromdetektionseinheit (111), die ausgelegt ist, einen elektrischen Strom zu detektieren, der von der elektrischen Leistungswandlereinheit (104) an einen Wechselstrommotor (105) ausgegeben wird;
   eine elektrische Stromwandlereinheit (112), die ausgelegt ist, Informationen von elektrischem Strom, die an der elektrischen Stromdetektionseinheit (111) detektiert wurden, in einen Erregungsstrom, einen Drehmomentstrom und einen primären elektrischen Strom umzuwandeln;

**dadurch gekennzeichnet, dass** der Leistungswandler Folgendes umfasst:
eine Übererregungsbestimmungseinheit (109), die ausgelegt ist:

einen angegebenen Stromwert mit dem primären elektrischen Strom zu vergleichen und
nur falls der primäre elektrische Strom größer als oder gleich dem angegebenen Stromwert ist:

die Übererregungsbestimmungseinheit (109) den Erregungsstrom mit dem Drehmomentstrom vergleicht, wobei der Erregungsstrom und der Drehmomentstrom an der elektrischen Stromwandlereinheit (112) umgewandelt werden, und Übererregungsbestimmungsinformationen ausgibt, wenn der Erregungsstrom größer ist als der Drehmomentstrom und
eine Steuereinheit (107), die ausgelegt ist, ein Steuersignal an die elektrische Stromwandlereinheit (104) abzugeben und eine Ausgabe zu steuern, die von der elektrischen Stromwandlereinheit an den Wechselstrommotor (105) geliefert wird, so dass die Steuereinheit (107) basierend auf den Übererregungsbestimmungsinformationen von der Übererregungsbestimmungseinheit (109) ferner ausgelegt ist, voreingestellte Einstellinformationen auszuwählen, um eine Übererregung der Ausgabe, die von der elektrischen Stromwandlereinheit geliefert wurde, zu unterdrücken.

2. Leistungswandler nach Anspruch 1,
wobei die elektrische Stromwandlereinheit (104) aus einer Schaltschaltung, einschließlich eines oberen Zweigs (104a) und eines unteren Zweigs (104b) besteht; und
die Steuereinheit (107) Unterbrechungsintervalle des oberen Zweigs (104a) und des unteren Zweigs (104b) basierend auf den Übererregungsbestimmungsinformationen von der Übererregungsbestimmungseinheit (109) steuert und einen elektrischen Ausgabestrom von der elektrischen Stromwandlereinheit unterdrückt.

3. Leistungswandler nach Anspruch 1 oder 2,
wobei die Steuereinheit (107) die Korrektur eines Erregungsspannungsbefehls in eine Richtung steuert, in der eine Ausgangsspannung der elektrischen Stromwandlereinheit (104) basierend auf den Übererregungsbestimmungsinformationen von der Übererregungsbestimmungseinheit (109) reduziert wird, und einen Übererregungszustand unterdrückt.

4. Leistungswandler nach Anspruch 1, wobei die Steuereinheit (107) die elektrische Stromwandlereinheit (104) steuert, um den Wechselstrommotor (105) basierend auf den Übererregungsbestimmungsinformationen von der Übererregungsbestimmungseinheit (109) zu stoppen.

5. Leistungswandler nach einem der Ansprüche 1 bis 5, ferner umfassend eine Anzeigeeinheit (106), die ausgelegt ist, einen Zustand des Leistungswandlers anzuzeigen, wobei ein Übererregungszustand auf der Anzeigeeinheit gemäß den Übererregungsbestimmungsinformationen von der Übererregungsbestimmungseinheit (109) angezeigt wird.

**Revendications**

1. Convertisseur électrique comprenant :

une unité de conversion électrique (104) configurée pour convertir du courant continu en puissance en courant alternatif souhaitée ;
une unité de détection de courant électrique (111) configurée pour détecter un courant électrique délivré en sortie par l'unité de conversion électrique à un moteur à courant alternatif (105) ;
une unité de conversion de courant électrique (112) configurée pour convertir des informations de courant électrique détectées au niveau de l'unité de détection de courant électrique (111) en un courant d'excitation, un courant de couple, et un courant électrique primaire ;
**caractérisé en ce que** le convertisseur électrique comprend :

une unité de détermination de surexcitation (109) configurée pour :

comparer une valeur de courant spécifiée avec le courant électrique primaire, et

uniquement dans le cas où le courant électrique primaire est supérieur ou égal à la valeur de courant spécifiée,

l'unité de détermination de surexcitation (109) compare le courant d'excitation avec le courant de couple, le courant d'excitation et le courant de couple étant convertis au niveau de l'unité de conversion de courant électrique (112), et délivre en sortie des informations de détermination de surexcitation lorsque le courant d'excitation est supérieur au courant de couple, et

une unité de commande (107) configurée pour donner un signal de commande à l'unité de conversion électrique (104) et commander une sortie fournie par l'unité de conversion électrique au moteur à courant alternatif (105), de telle sorte que sur la base des informations de détermination de surexcitation provenant de l'unité de détermination de surexcitation (109), l'unité de commande (107) est en outre configurée pour sélectionner des informations de réglage préétablies pour supprimer une surexcitation de la sortie fournie par l'unité de conversion électrique.

2. Convertisseur électrique selon la revendication 1,
dans lequel l'unité de conversion électrique électrique (104) est configurée comme un circuit de commutation comprenant un bras supérieur (104a) et un bras inférieur (104b ; et
l'unité de commande (107) commande des intervalles d'interruption du bras supérieur (104a) et du bras inférieur (104b) sur la base des informations de détermination de surexcitation provenant de l'unité de détermination de surexcitation (109), et supprime un courant électrique de sortie à partir de l'unité de conversion électrique.

3. Convertisseur électrique selon la revendication 1 ou 2,
dans lequel l'unité de commande (107) commande une correction d'une instruction de tension d'excitation dans une direction dans laquelle une tension de sortie de l'unité de conversion électrique (104) est réduite sur la base des informations de détermination de surexcitation provenant de l'unité de détermination de surexcitation (109), et supprime un état de surexcitation.

4. Convertisseur électrique selon la revendication 1, dans lequel l'unité de commande (107) commande l'unité de conversion électrique (104) pour arrêter le moteur à courant alternatif (105) sur la base des informations de détermination de surexcitation provenant de l'unité de détermination de surexcitation (109).

5. Convertisseur électrique selon l'une quelconque des revendications 1 à 5, comprenant en outre une unité d'affichage (106) configurée pour afficher un état du convertisseur électrique, dans lequel un état de surexcitation est affiché sur l'unité d'affichage selon les informations de détermination de surexcitation provenant de l'unité de détermination de surexcitation (109).

# FIG. 1

EP 2 736 165 B1

# FIG. 2

```
                    ( START )
                        │
                        ▼
        ┌───────────────────────────────┐  ⌇S201
        │     TAKE IN ELECTRIC VALUES    │
        └───────────────────────────────┘
                        │
                        ▼                    ⌇S202
                  ╱─────────────╲
                 ╱   IS PRIMARY   ╲
                ╱  CURRENT AT SPECIFIED ╲    NO
                ╲  CURRENT VALUE OR     ╱────────┐
                 ╲      MORE?          ╱         │
                  ╲─────────────╱                │
                        │ YES                    │
                        ▼              ⌇S203     │
                  ╱─────────────╲                │
                 ╱  EXCITATION   ╲     NO         │
                ╱ CURRENT > TORQUE ╲──────────────┤
                ╲    CURRENT?      ╱              │
                 ╲─────────────╱                 │
                        │ YES                     │
                        ▼                 ⌇S204   │
        ┌───────────────────────────────┐        │
        │  DETERMINE AS AC MOTOR IN      │        │
        │     OVEREXCITATION STATE       │        │
        └───────────────────────────────┘        │
                        │◄───────────────────────┘
                        ▼                 ⌇S205
        ┌───────────────────────────────┐
        │     OUTPUT STATE TO UNITS      │
        └───────────────────────────────┘
                        │
                        ▼
                    (  END  )
```

# FIG. 3

```
                 ( START )
                     │
                     ▼
      ┌─────────────────────────────┐  ⌇S301
      │  ACQUIRE ITEMS OF INFORMATION │
      └─────────────────────────────┘
                     │
                     ▼              ⌇S302
               ╱─────────────╲
              ╱  IS AC MOTOR   ╲    NO
             ╱ IN OVEREXCITATION ╲──────────┐
             ╲     STATE?        ╱           │
              ╲─────────────╱                │
                     │ YES   ⌇S303           │ ⌇S304
                     ▼                        ▼
      ┌──────────────────────┐   ┌──────────────────────┐
      │   DRIVE AC MOTOR IN   │   │    DRIVE AC MOTOR     │
      │  OVEREXCITATION STATE │   │       NORMALLY        │
      └──────────────────────┘   └──────────────────────┘
                     │                        │
                     │◄───────────────────────┘
                     ▼
                 (  END  )
```

# FIG. 4

| | | | |
|---|---|---|---|
| PWM SIGNAL | UPPER ARM | ON OFF | |
| | LOWER ARM | OFF ON | |

MINIMUM DEAD TIME VALUE

| DEAD TIME ADDED SIGNAL | UPPER ARM |
|---|---|
| | LOWER ARM |

DEAD TIME INSTRUCTION VALUE

MINIMUM DEAD TIME VALUE

| VARIABLE DEAD TIME ADDED SIGNAL | UPPER ARM |
|---|---|
| | LOWER ARM |

# FIG. 5

```
        ┌─────────┐
        │  START  │
        └─────────┘
             │
             ▼
┌──────────────────────────────────┐
│ TAKE IN EXCITATION CURRENT VALUE  │──── S501
└──────────────────────────────────┘
             │
             ▼
         ╱─────────╲                      S502
        ╱ DETECTED  ╲
       ╱ EXCITATION  ╲      NO
      ╱ CURRENT >     ╲─────────┐
      ╲ EXCITATION    ╱         │
       ╲ CURRENT     ╱          │
        ╲COMPARISON ╱           │
         ╲ VALUE?  ╱            │
          ╲───────╱             │
             │ YES              │
             ▼                  │
┌──────────────────────────┐    │
│ DETERMINE AS AC MOTOR IN  │─── S503
│   OVEREXCITATION STATE    │    │
└──────────────────────────┘    │
             │                  │
             ▼◄─────────────────┘
┌──────────────────────────┐
│  OUTPUT STATE TO UNITS    │──── S504
└──────────────────────────┘
             │
             ▼
        ┌─────────┐
        │   END   │
        └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008172949 A
- US 2003020432 A
- WO 2010020423 A
- JP H1118496 B